# EUROPEAN PATENT APPLICATION

(11) **EP 4 687 263 A1**
(43) Date of publication of application: **04.02.2026**
(21) Application number: 25193439.4
(22) Date of filing: 01.08.2025
(51) Int. Cl.: H02J 7/00, H02J 50/10, H01F 27/36

(54) **WIRELESS CHARGER DEVICE**

(30) Priority: 02.08.2024 US 202418793666
(71) Applicant: Apple Inc., Cupertino, CA 95014 (US)
(72) Inventor: HAUG, Grant S., Cupertino, 95014 (US); NGUYEN, Viet-Anh, Cupertino, 95014 (US); WEBER, Robert V., Cupertino, 95014 (US)
(74) Representative: Barton, Russell Glen

(57) **Abstract**

Wireless charger devices can incorporate various combinations of features, such as monolithic ferrite structures to shield the inductive coil that include sidewalls to confine flux, a common-mode choke integrated with the ferrite, and/or robust grounding of the ferrite and an electric shield. Such devices can provide increased power transfer capability in a compact form factor.

## Description

### CROSS-REFERENCE TO RELATED APPLICATION

This application claims priority to U.S. Patent Application No. 18/793,666, for "WIRELESS CHARGER DEVICE" filed on August 2, 2024.

### TECHNICAL FIELD

This disclosure relates generally to inductive charging systems and in particular to wireless charger devices that can be used to charge portable electronic devices.

### BACKGROUND

Portable electronic devices (e.g., mobile phones, media players, electronic watches, and the like) operate when there is charge stored in their batteries. Some portable electronic devices include a rechargeable battery that can be recharged by coupling the portable electronic device to a power source through a physical connection, such as through a charging cord. Using a charging cord to charge a battery in a portable electronic device, however, requires the portable electronic device to be physically tethered to a power outlet. Additionally, using a charging cord requires the mobile device to have a connector, typically a receptacle connector, configured to mate with a connector, typically a plug connector, of the charging cord. The receptacle connector includes a cavity in the portable electronic device that provides an avenue via which dust and moisture can intrude and damage the device. Further, a user of the portable electronic device has to physically connect the charging cable to the receptacle connector in order to charge the battery.

To avoid such shortcomings, wireless charging technologies (also referred to as inductive charging technologies) have been developed that exploit electromagnetic induction to charge portable electronic devices without the need for a charging cord. For example, some portable electronic devices can be recharged by merely resting the device on a charging surface of a wireless charger device. A transmitter coil disposed below the charging surface is driven with an alternating current that produces a time-varying magnetic flux that induces a current in a corresponding receiver coil in the portable electronic device. The induced current can be used by the portable electronic device to charge its internal battery.

### SUMMARY

Existing wireless charger devices are limited in the amount of power they can provide. For instance, many wireless charger devices compliant with existing Qi standards for charging of mobile devices may provide a maximum power of about 15 watts. Providing higher power is desirable, e.g., to enable faster charging of mobile devices. However, operating a wireless charger device at higher power generally increases electromagnetic interference (EMI) due to stray electromagnetic fields produced by the charging coil. EMI can adversely affect other electronic devices in the area, and many governments have established regulations to limit EMI by limiting electromagnetic emissions from wireless charger devices.

Certain embodiments of the present invention relate to wireless charger devices that can provide increased power while maintaining acceptably low EMI and a compact form factor. Wireless charger devices according to various embodiments can incorporate one or more features, such as monolithic ferrite structures to shield the inductive coil that include sidewalls to confine flux, a common-mode choke integrated with the ferrite, and/or robust grounding of the ferrite and an electric shield. Such features can enable wireless charger devices to provide increased power transfer capability in a compact form factor. For example, a wireless charger device according to various embodiments can have a housing including a cap and a housing base forming an enclosure. The housing base can be made at least in part of an electrically conductive material. An annular magnetic alignment structure can be disposed adjacent to a sidewall of the housing. An inductive coil can be disposed inboard of the annular magnetic alignment structure. A circuit board can be disposed under the inductive coil and can include one or more integrated circuits configured to control a current through the inductive coil. A monolithic ferrite can be disposed behind a back surface of the inductive coil. The monolithic ferrite can include sidewall portions that extend into an area between the inductive coil and the annular magnetic alignment structure and a raised central portion that extends over the circuit board. A conductive material can be disposed on at least a portion of a back surface of the monolithic ferrite. An electric shield can be disposed over a front surface of the inductive coil. The electric shield having a plurality of grounding tabs that extend from a peripheral edge of the electric shield and wrap around to the back surface of the monolithic ferrite. One or more standoffs made of an electrically conductive material can be disposed between the back surface of the monolithic ferrite and the back wall of the housing base. Each of the grounding tabs of the electric shield can be connected between the conductive material on the back surface of the monolithic ferrite and one of the standoffs, thereby grounding the electric shield to the housing base.

As another example, a wireless charger device according to various embodiments can have a housing including a cap and a housing base forming an enclosure. An annular magnetic alignment structure can be disposed adjacent to a sidewall of the housing. An inductive coil can be disposed inboard of the annular magnetic alignment structure. A circuit board can be disposed under the inductive coil and can include one or more integrated circuits configured to control a current through the inductive coil. A ferrite can be disposed behind a back surface of the inductive coil. The ferrite can have a planar portion that extends behind the back surface of the inductive coil and that has a slot therethrough. A first choke coil can be wrapped around a portion of the ferrite between an edge of the ferrite and the slot such that windings of the first choke coil extend through the slot, and a second choke coil can also be wrapped around the portion of the ferrite between the edge of the ferrite and the slot such that windings of the second choke coil extend through the slot. For instance, windings of the first and second choke coils can be interleaved or alternated with each other along the length of the slot. The first choke coil and the second choke coil can be connected to respective first and second terminals of the inductive coil.

As another example, a wireless charger device according to various embodiments can have a housing including a cover and a housing base forming an enclosure. The housing base can include an outer shell made of plastic, an inner frame made of plastic, and an electrically conductive insert between the outer shell and the inner frame. The electrically conductive insert can include a rear wall and a sidewall, and portions of the electrically conductive insert can be exposed through openings in the inner frame. An annular magnetic alignment structure can be disposed adjacent to the sidewall of the electrically conductive insert. An inductive coil can be disposed inboard of the annular magnetic alignment structure and a sidewall of the inner frame. A circuit board can be disposed under the inductive coil and can include one or more integrated circuits configured to control a current through the inductive coil. A ferrite can be disposed behind a back surface of the inductive coil. The ferrite can include sidewall portions that extend into an area between the inductive coil and the sidewall of the inner frame and a raised central portion that extends over the circuit board. A conductive material can be disposed on at least a portion of a back surface of the ferrite. The conductive material on the back surface of the ferrite can be electrically connected to the electrically conductive insert via one of the openings in the inner frame.

The following detailed description, together with the accompanying drawings, will provide a better understanding of the nature and advantages of the claimed invention.

### BRIEF DESCRIPTION OF THE DRAWINGS

FIGs. 1A and 1B show a top view and a side view of a wireless charger device according to some embodiments.
FIG. 2 shows a simplified side cross-section view of a system including a wireless charging device according to some embodiments.
FIG. 3 shows an example of an arrangement of magnetic polarities that can be used in annular magnetic alignment components according to some embodiments.
FIG. 4 shows an exploded view of a wireless charger device according to some embodiments.
FIG. 5 shows a cutaway view of selected components of the wireless charger device of FIG. 4 according to some embodiments.
FIG. 6 is a simplified schematic circuit diagram illustrating implementation of a driver circuit that includes a common-mode choke.
FIG. 7 shows a perspective view of a wireless charger device illustrating an implementation of a common-mode choke according to some embodiments.
FIGs. 8-10 are simplified perspective views illustrating example configurations of electric shields that can be used in a wireless charger device according to various embodiments.
FIG. 11 shows a perspective cutaway view of a wireless charger device illustrating grounding of an electric shield according to some embodiments.
FIG. 12 shows an exploded view of a wireless charger device according to some embodiments.
FIG. 13 is a partial cross-section view showing selected components of the wireless charger device of FIG. 12 according to some embodiments.
FIGs. 14-17 illustrate examples of incorporating copper structures into a magnet of an annular magnetic alignment component according to various embodiments.
FIG. 18 shows an exploded view of a cable assembly according to some embodiments.

### DETAILED DESCRIPTION

The following description of exemplary embodiments of the invention is presented for the purpose of illustration and description. It is not intended to be exhaustive or to limit the claimed invention to the precise form described, and persons skilled in the art will appreciate that many modifications and variations are possible. The embodiments have been chosen and described in order to best explain the principles of the invention and its practical applications to thereby enable others skilled in the art to best make and use the invention in various embodiments and with various modifications as are suited to the particular use contemplated.

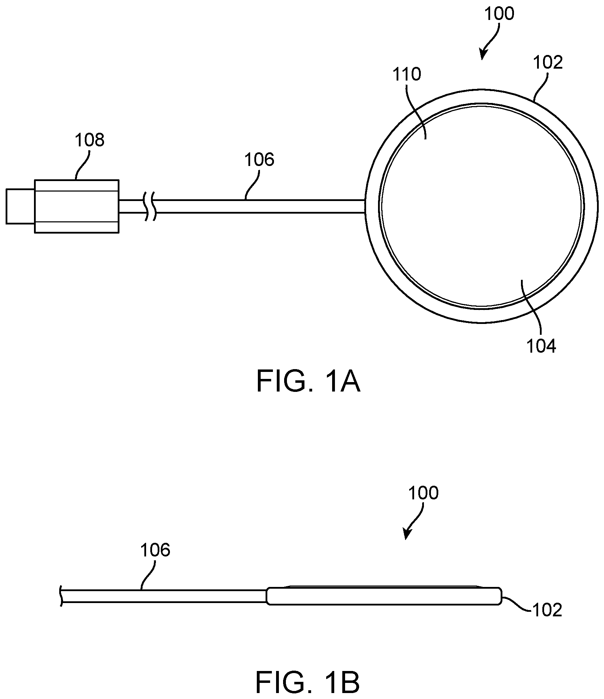

FIGs. 1A and 1B show a top view and a side view of a wireless charger device 100 according to some embodiments. Wireless charger device 100 can have a two-piece puck-shaped main body 110 formed from a cap (or cover) 104 and a housing base 102. Cover 104, which provides a charging surface for wireless charger device 100, can be made of polycarbonate or other plastic and coated on the front side (the surface visible in FIG. 1A) with soft-touch silicone or the like to provide a durable surface. Other materials that are permeable to electromagnetic fields can also be used. In some embodiments, the front surface of cover 104 can be a low-friction surface (e.g., textured silicone), as wireless charger device 100 can rely on magnetic forces rather than friction for maintaining alignment with a device to be charged. Housing base 102 can be made of aluminum, other electrically conductive materials, or a plastic material with a conductive insert. Examples are described below. A cable 106 can be provided to connect wireless charger device 100 to an external power source via a connector boot 108, which can provide a standard USB-C connector 109 or the like. Wireless charger device 100 can be designed with a compact form factor for easy portability.

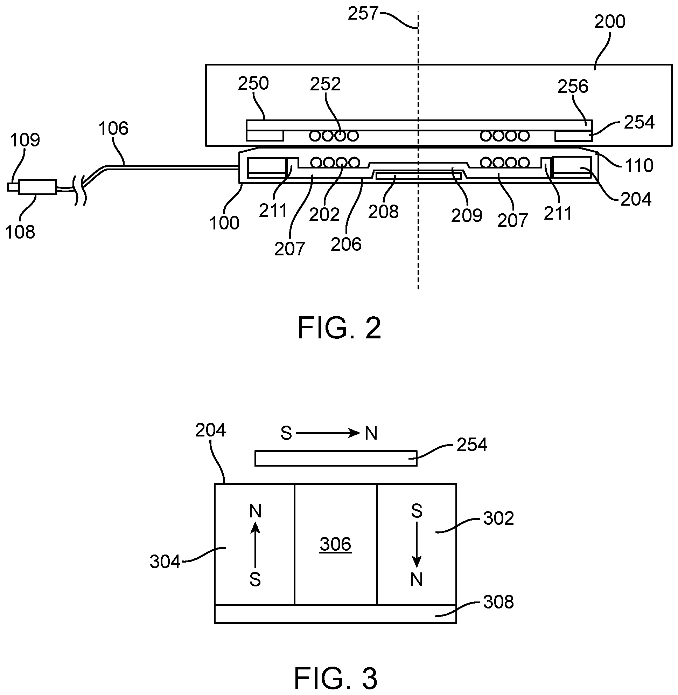

FIG. 2 shows a simplified side cross-section view of a wireless charging system that includes wireless charger device 100 according to some embodiments and an electronic device 200. Electronic device 200 can be, for example, a smart phone or other portable electronic device. Electronic device 200 can include various components (not shown) such as a battery, a processor, memory, a data communication interface (e.g., cellular or Wi-Fi antenna and supporting circuitry) a display (e.g., a touchscreen display), a speaker, a microphone, one or more control buttons, and so on. The rear surface of electronic device 200 can include a magnetically transparent window made of materials such as crystal, glass, polymers, or any other material that permits the transmission of magnetic fields having a frequency in a range used for wireless power transfer (e.g., from about 300 kHz to about 2 MHz), while the rest of the housing of electronic device 200 can be made of other materials such as aluminum, steel, ceramic, or other materials that may or may not impede transmission of time-varying magnetic fields. Electronic device 200 can include a wireless power receiving module 250. Wireless power receiving module 250 can include an inductive coil 252 configured to transfer charge to a battery of electronic device 200. Annular magnetic alignment component 254 can include magnets arranged in an annular shape around inductive coil 252. Wireless power receiving module 250 can also include shielding 256 and/or other components (not shown). Electronic device 200 is illustrative of a general category of electronic devices that can be charged using wireless power transfer.

Wireless charger device 100 can include an inductive coil 202 and a main logic board 208. Main logic board 208 can provide electrical connections between the ends of inductive coil 202 and current-carrying wires within cable 106 that enter main body 110. Main logic board 208 can also include one or more integrated circuit devices to control operation of inductive coil 202, and signal lines can be connected between main logic board 208 and additional control circuitry in connector boot 108 as described below. In operation, wireless charger device 100 can drive inductive coil 202 using current provided via cable 106, thereby generating a time-varying magnetic field, e.g., an oscillating field having a particular frequency. The time-varying magnetic field can induce an electrical current in inductive coil 252 of electronic device 200, and the electrical current can be used to charge an internal battery of electronic device 200 and/or to supply power to other circuitry within electronic device 200.

In principle, power transfer from wireless charger device 100 to electronic device 200 can be increased by driving inductive coil 202 at higher current. Higher current produces larger time-varying magnetic fields, which can induce larger currents in inductive coil 252, increasing the rate of power transfer. For efficient operation and to comply with regulatory limits on electromagnetic interference (EMI), inductive coil 202 can be shielded to direct magnetic flux toward electronic device 200 and away from other regions. According to some embodiments, shielding of inductive coil 202 can be provided in part by a ferrite 206 that can be disposed beneath (on a back side of) inductive coil 202 and over (on a front side of) main logic board 208. Ferrite 206 can be formed as a single (monolithic) piece of ferrimagnetic material (e.g., MnZn) that is shaped during manufacture into a "bucket." For instance, ferrite 206 can be shaped to include an annular recess region 207 in which inductive coil 202 rests, a central raised region 209 (inboard of inductive coil 202) that extends over the top of main logic board 208, and a peripheral sidewall 211, all formed as a single piece of ferrite material. During operation of inductive coil 202, ferrite 206 can redirect AC magnetic flux toward electronic device 200, thereby improving efficiency of power transfer. Sidewall 211 can reduce field leakage through the sides of wireless charger device 100, thereby reducing EMI. Central raised region 209 shields components on main logic board 208 from the magnetic flux. Forming ferrite 206 as a single piece of ferrite material shaped into a non-planar configuration, as opposed to stacking multiple planar pieces of ferrite material, can improve device performance, including shielding, and can help to allow wireless charger device 100 to operate at higher power without exceeding regulatory limits on EMI.

Efficiency of wireless power transfer depends on a number of factors, including alignment between the transmitter and receiver coils. In some embodiments, wireless charger device 100 and electronic device 200 can include respective annular magnetic alignment components 204, 254 to attract and hold respective inductive coils 202, 252 in a desired alignment. For instance, the desired alignment may align inductive coils 202, 252 along a longitudinal axis 257. Each of annular magnetic alignment components 204, 254 can be formed from a single annular magnet or a number of magnets (e.g., arcuate or trapezoidal magnets arranged to form a ring). In some embodiments, the ring (or annulus) can include a gap to provide a path for electrical wires from cable 106. Annular magnetic alignment components 204, 254 can have complementary magnetic polarities that mutually attract into the desired alignment. FIG. 3 shows an example of an arrangement of complementary magnetic polarities that can be used in annular magnetic alignment components according to some embodiments. Shown is a cross-section view of one side of annular magnetic alignment component 204 (also referred to as a "primary" annular magnetic alignment component) and annular magnetic alignment component 254 (also referred to as a "secondary" annular magnetic alignment component). Secondary annular magnetic alignment 254 component can have a radial polarization (e.g., magnetic north pole oriented toward the inboard side of the annulus). Primary annular magnetic alignment component 204 can have a "quad-pole" polarization. For instance, in an inner annular region 302, the magnetic polarity can be oriented axially with the magnetic south pole proximate to secondary annular magnetic alignment component 254, and in an outer annular region 304, the magnetic polarity can be oriented axially with the magnetic north pole proximate to secondary annular magnetic alignment component 254. Inner annular region 302 and outer annular region 304 can be separated by a non-magnetized central region 306. This arrangement can confine most or all of the DC magnetic flux to the volume occupied by annular magnetic alignment components 204, 254. Other configurations of magnetic polarity can also be used.

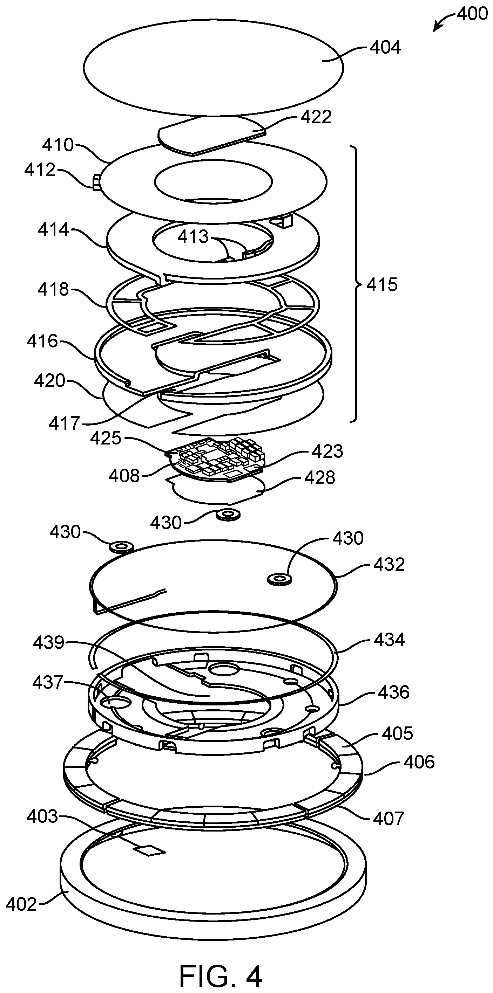

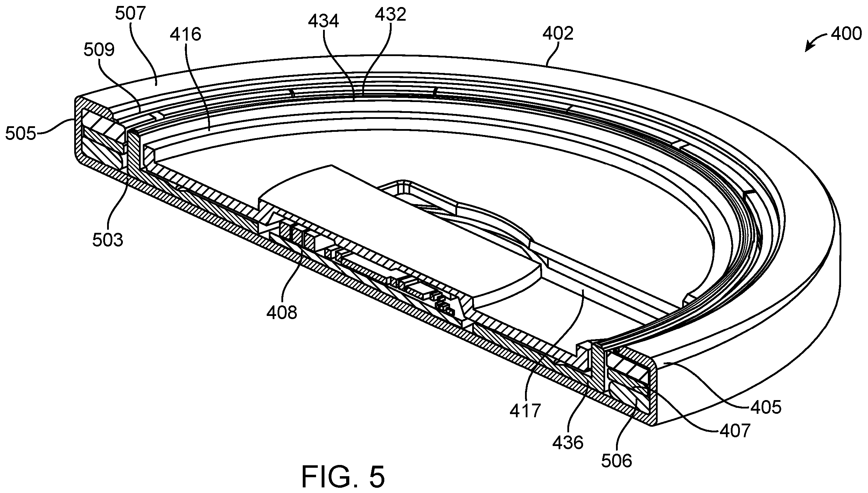

FIG. 4 shows an exploded view of a wireless charger device 400 (implementing wireless charger device 100) according to some embodiments, and FIG. 5 shows a cutaway view of selected components of wireless charger device 400. Wireless charger device 400 can have a puck-shaped main body defined by a cover (or cap) 404 and a housing base 402. Cover 404, which provides a charging surface for wireless charger device 400, can be made of polycarbonate or other plastic and coated on the front side (the top side in FIG. 4) with soft-touch silicone or the like to provide a durable surface. Other materials that are permeable to electromagnetic fields can also be used. In some embodiments, the front surface of cover 404 can be a low-friction surface (e.g., textured silicone), as wireless charger device 400 can rely on magnetic forces rather than friction for maintaining alignment with a device to be charged. Housing base 402 can be made of aluminum, other electrically conductive materials, or a plastic material. As best seen in FIG. 5, housing base 402 can be formed as a monolithic structure that includes include a rear wall 503, a sidewall 505, and an overhanging lip 507. In some embodiments, lip 507 can be sloped (e.g., at an angle of around 5 or 10 degrees) so that its inner edge is higher than its outer edge. A recessed ledge 509 can extend radially inward from lip 507 to receive cover 404. In addition, cover 404 can be shaped such that the top surface is raised above the inner edge of lip 507. This arrangement can reduce contact between an electronic device (e.g., electronic device 200) and overhanging lip 507 when a user is bringing the electronic device into contact with wireless charger device 400. In some embodiments, cover 404 can be sealed to recessed ledge 509 using a suitable sealing material. As shown in FIG. 4, housing base 402 can include an opening 403 through sidewall 505 to allow electrical conductors (e.g., wires) to be connected between the interior and exterior of wireless charger device 100.

An annular magnetic alignment component 406 can include arcuate magnets 405 disposed on an annular DC shield 407. Arcuate magnets 405 can be, for example, sintered rare-earth magnets and can be magnetized into a quad-pole configuration as described above with reference to FIG. 3. Some or all surfaces of arcuate magnets 405 can be plated with copper or other materials, as in examples described below. In some embodiments, DC shield 407 can be segmented, e.g., into four arcuate segments, and each segment of DC shield 407 can have one or more arcuate magnets 405 mounted thereon. The segments can be individually inserted into housing base 402 such that each segment fits under lip 507 and the segments are adjacent to each other (either abutting or having small gaps to accommodate manufacturing tolerances). Fiducial surface features may be provided on the inner surface of housing base 402 to facilitate correct positioning of each segment. A gap that is large enough to accommodate electrical connection paths can be provided between two adjacent segments of annular magnetic alignment component 406, and the gap can be aligned with opening 403 in housing base 402. To maximize the magnetic alignment force exerted by annular magnetic alignment component 204 on a portable electronic device placed adjacent to the top surface of cover 404, annular magnetic alignment component 204 can be positioned such that the proximal surfaces of arcuate magnets 405 are adjacent to (e.g., in contact with) the inner surface of lip 507. In some embodiments, DC shield 407 can rest on the inner surface of rear wall 503 of housing base 402, and annular magnetic alignment component 204 can extend to the full height of the inner side of sidewall 505 so that the proximal surfaces of arcuate magnets 405 are adjacent to the inner surface of lip 507. In other embodiments, annular magnetic alignment component 204 can be shorter than the inner side of sidewall 505, and a spacer 506 (shown in FIG. 5) can be positioned between DC shield 407 and rear wall 503 so that arcuate magnets 405 are adjacent to the underside of lip 507. In any event, adhesives (not shown) can be used to hold annular magnetic alignment component 406 (or sectors thereof) in position.

As shown in FIG. 4, a charging coil assembly 415 can include an inductive coil 414 (corresponding to inductive coil 202), an electric shield 410, a monolithic ferrite 416 (corresponding to ferrite 206), and a shim 422. Inductive coil 414 can be a coil of wound copper wire with terminals 413 in the region inboard of inductive coil 414. Inductive coil 414 can have a front (or top) surface oriented toward cover 404 and an opposing back (or bottom) surface. Monolithic ferrite 416 can be made of ferrimagnetic material (e.g., MnZn). Monolithic ferrite 416 can be made of a single integral piece of the ferrimagnetic material that is shaped to surround the back surface and inner and outer sides of inductive coil 414 and to cover a front surface of a main logic board 408. A slit 417 can provide space for a wire extending from the outer edge of inductive coil 414 across the back side of inductive coil 414 to terminal 413 in the region inboard of inductive coil 414. Inductive coil 414 can be held in place using pressure-sensitive adhesive (PSA) 418 Monolithic ferrite 416 can have a ferrite shield 420 applied to the back (or bottom) surface. In various embodiments, ferrite shield 420 can be made of a conductive material such as copper. Ferrite shield 420 can be a separate structure, e.g., die-cut copper, or ferrite shield 420 can be formed by plating or coating copper (or other material) on the back surface of monolithic ferrite 416. Ferrite shield 420 can be grounded to housing base 402 via standoffs 430.

Electric shield (or "e-shield") 410 can be positioned over the proximal (or top) surface of inductive coil 414. E-shield 410 can be made of a flexible printed circuit board patterned with conductive material to block electric fields while being permeable to magnetic fields; specific examples are described below. E-shield 410 can include one or more peripheral grounding tabs 412, which can extend around ferrite 416 and contact standoffs 430 to provide grounding as described below. Shim 422 can be made of a polycarbonate material and can be used to provide a uniform height across the proximal surface of charging coil assembly 415, helping to support cover 104.

A support frame 436 can be positioned between annular magnetic alignment component 406 and charging coil assembly 415. Support frame 436 can be a frame made of glass-reinforced polycarbonate or other plastics or the like and can have a raised outer periphery that extends toward cover 404. The center portion of support frame 436 can include openings 437 in which standoffs 430 can be placed and a central opening 439 to accommodate main logic board 408 without adding to the overall height of wireless charger device 100. A near-field communication (NFC) coil 432, which can be, e.g., a planar coil of three, four, or five turns, can be placed on top of the raised outer periphery of support frame 436 and held in place using pressure-sensitive adhesive (PSA) 434. PSA 434 and NFC coil 432 can be made of materials having the same or similar coefficient of thermal expansion to reduce thermal stress. As shown in FIG. 5, NFC coil 432 can be inboard of the inner edge of lip 507 and can transmit through cover 404. Ends of NFC coil 432 can be electrically coupled to main logic board 408, and main logic board 408 can include NFC tag circuitry that can support identification and/or authentication of wireless charger device 400 to a compatible electronic device.

Main logic board 408 (corresponding to main logic board 208 in FIG. 2) can be disposed on a central portion of rear wall 503 of housing base 402 and secured in place with a pressure-sensitive adhesive 428. Main logic board 408 can include contact pads 425 that connect to external wires (e.g., from cable 106) extending through opening 403 of housing base 402, contact pads 423 that connect to terminals 413 of inductive coil 414, and additional ground contacts on the back (bottom) side for grounding housing base 402. Main logic board 408 can also include circuit components to control operation of inductive coil 414. For example, depending on implementation, main logic board 408 can be coupled to receive DC power via the contact pads and can include power circuitry for driving inductive coil 414 (e.g.,. a boost circuit and an inverter). In addition or instead, main logic board 408 can include logic circuits (e.g., a microcontroller, ASIC, FPGA, or the like) to monitor the behavior of inductive coil 414 and to control current supplied to inductive coil 414 based on the monitoring. Examples of control logic for operating a wireless charging coil are known in the art; for instance, the logic circuits can implement functionality conforming to the Qi standard for wireless charging. In some embodiments, main logic board 408 can also include NFC tag circuit components coupled to NFC coil 432. In some embodiments, logic circuits, power circuits, and/or NFC tag circuits can be implemented as integrated circuits mounted on main logic board 408, and the integrated circuits may be covered by shield cans to avoid electrical interference. In some embodiments, some or all of the power circuitry can be external to the main body formed by housing base 402 and cover 404. For instance, as described below, power circuitry can be disposed in connector boot 108 (shown in FIG. 1).

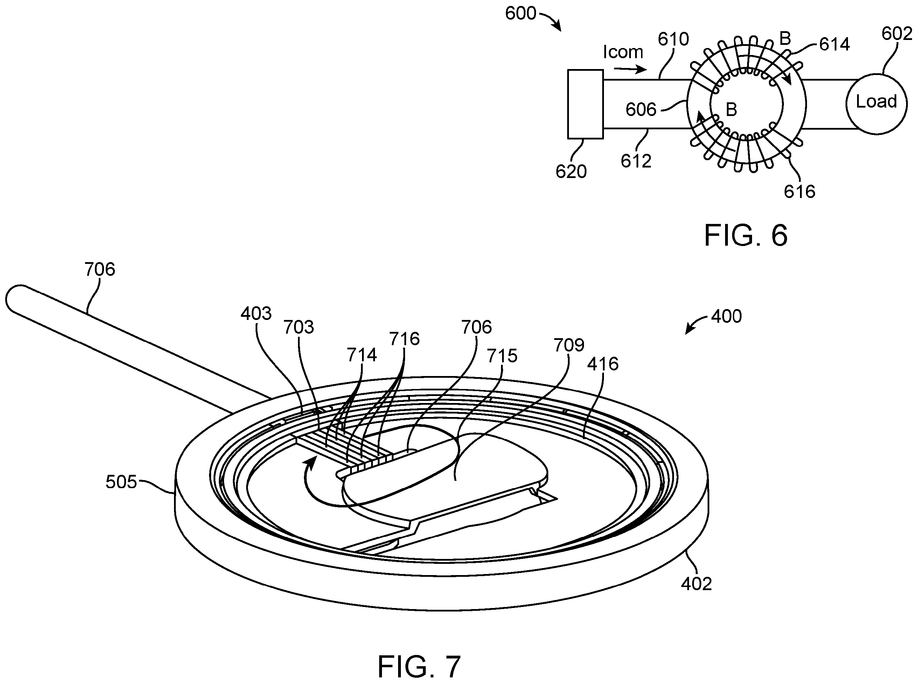

In a wireless charging circuit, a common mode choke may be employed to reduce noise, including EMI. FIG. 6 is a simplified schematic circuit diagram illustrating implementation of a driver circuit 600 that includes a common-mode choke. Signal wires 610, 612 are coupled between a load 602 (which can be, e.g., an inductive coil) and a current source 620. Portions 614, 616 of signal wires 610 and 612 are wrapped around an annular magnet 606, so that current circulating through signal wires 610 and 612 creates a circulating magnetic field (shown by the arrows) in annular magnet 606, providing the common-mode choke.

According to some embodiments, ferrite 416 can be leveraged to provide a common-mode choke in wireless charger device 400. FIG. 7 shows a perspective view of wireless charger device 400 illustrating an implementation of a common-mode choke using ferrite 416 according to some embodiments. In this example, ferrite 416 includes a gap 703 in the sidewall and a slot 706 formed in an area between gap 703 and raised center portion 709. Two current-carrying wires 714 and 716 from cable 106 enter housing base 402 through opening 403 in sidewall 505 of housing base 402. Wires 714 and 716 are wound in interleaved fashion around a "choke" portion of ferrite 416 between gap 703 and slot 706. For instance, turns of wire 714 can alternate with turns of wire 716 as shown. The other ends of wires 714 and 716 can be connected to contact pads 425 of main logic board 408 (shown in FIG. 4). In this example, a three-turn coil is formed in each of wires 714, 716; the number of turns can be varied. Current in wires 714, 716 can create circulating magnetic flux (indicated by flux line 715) in a portion of ferrite 416, thereby providing a common-mode choke without using an additional magnet that would require additional space.

Referring again to FIG. 4, e-shield 410 can prevent unwanted capacitive coupling between electromagnetic fields generated in wireless charger device 100 and capacitive components of other devices, such as a touchscreen display that may be present in a device being charged. For instance, since only the time-varying magnetic field is useful for inductive charging, e-shield 410 can block AC electric fields while allowing AC magnetic fields to pass through. In various embodiments, e-shield 410 can include a pattern of electrically conductive and non-conductive regions to provide the desired blocking of electric fields without producing eddy currents in e-shield 410.

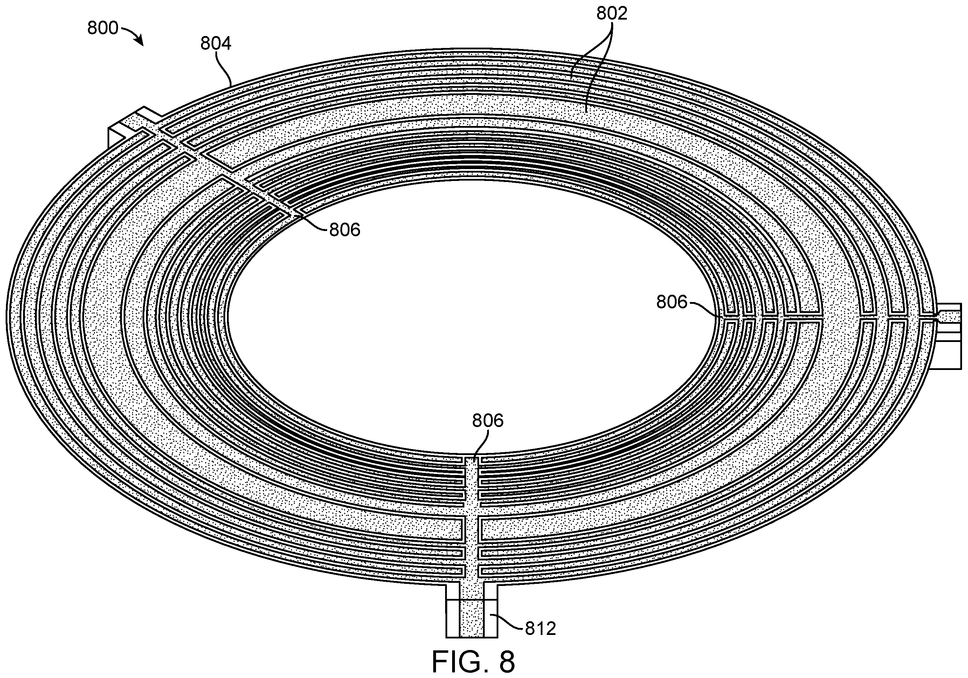

FIGs. 8-10 are simplified perspective views illustrating example configurations of e-shields that can be used as e-shield 410 according to various embodiments. FIG. 8 shows an e-shield 800 in which electrically conductive traces 802 (e.g., copper) are printed onto a non-conductive substrate 804 (which can be, e.g., polyethylene terephthalate (PET) or other suitable material). As shown, traces 802 form arcs without forming complete circles. Avoiding complete circles of conductive material can prevent formation of eddy currents that may reduce the net magnetic field. Traces 802 can be connected to radial traces 806, which extend to grounding tabs 912 at the periphery of substrate 804. In this example, any given arcuate trace 802 connects to only one radial trace 806, thereby avoiding eddy currents.

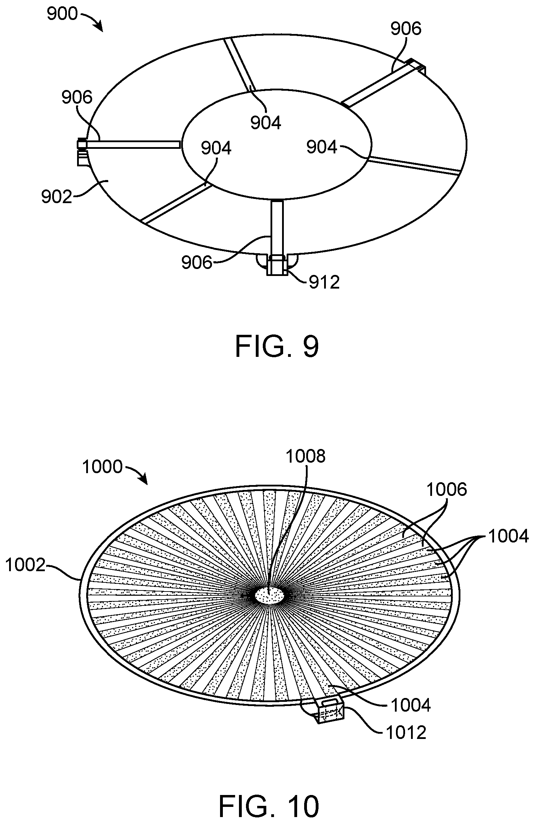

FIG. 9 shows an e-shield 900 having a body 902 formed of silver-plated PET. (Other non-conductive substrates that are conducive to silver plating may be substituted.) The silver plating layer can include radial gaps 904 to prevent eddy currents. Similarly to e-shield 800, e-shield 900 includes radial conductive traces 906 (e.g., copper) that extend to grounding tabs 912 at the periphery of body 902. In some embodiments, conductive traces 906 can be evenly spaced around e-shield 900, and a radial gap 904 can be provided midway between each pair of radial conductive traces 906. Compared to e-shield 800, e-shield 900 can be made with a reduced amount of copper.

FIG. 10 shows an e-shield 1000 having a body 1002 formed of an insulating substrate with a pattern of alternating radial conductive "spokes" 1004 (e.g., copper) separated by insulating gaps 1006 that prevent formation of eddy currents. A central conductive "hub" 1008 electrically connects the conductive spokes 1004. The pattern of conductive spokes 1004 and hub 1008 can be formed, e.g., using die-cut copper mounted on an insulating substrate or using thin-film technology. In this example, one conductive spoke 1004 extends to a grounding tab 1012. Since all conductive spokes 1004 are connected at hub 1008, e-shield 1000 can have just one grounding tab.

In various embodiments, e-shield 410 can be implemented using any of these or other patterns of conductive and insulating areas. Regardless of the particular configuration of e-shield 410, one or more peripheral grounding tabs 412 made of or coated with electrically conductive material can be provided to facilitate grounding of e-shield 410. As will become apparent, the particular construction of grounding tab(s) 412 can be varied, provided that an electrical contact is exposed at the end of grounding tab(s) 412.

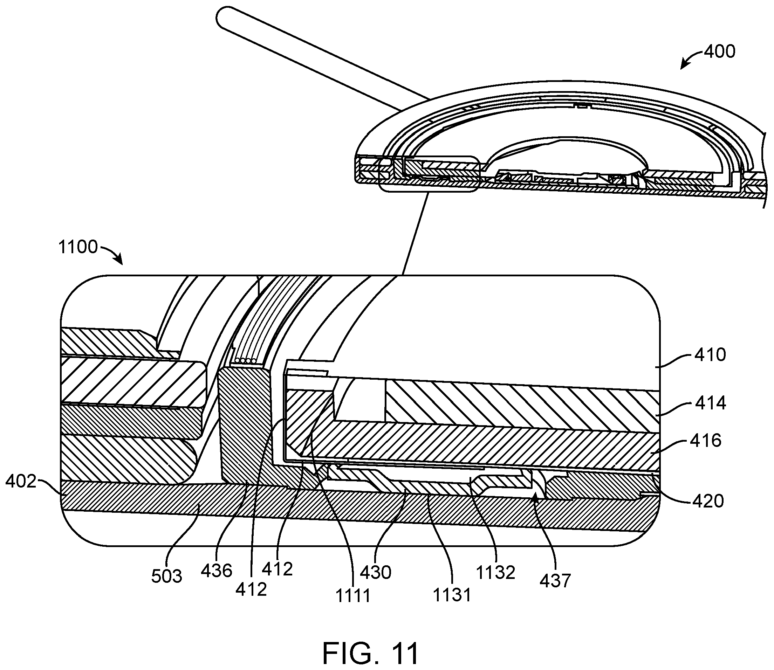

FIG. 11 shows a perspective cutaway view of wireless charger device 100 with an inset 1100 showing the grounding of e-shield 410 according to some embodiments. As shown, e-shield 410 overlies inductive coil 414, and the outer edge of e-shield 410 can rest on the outer sidewall 1111 of ferrite 416. Grounding tab 412 wraps around outer sidewall 1111 of ferrite 416 and extends partway across the bottom of ferrite shield 420, e.g., such that exposed conductive material of grounding tab 412 aligns with standoff 430. Standoff 430 can be formed of a disc of aluminum or the like with a concave center portion 1131 that can be welded or otherwise fused to the inner bottom surface of housing base 402. Standoff 430 can fit into opening 437 of support frame 436. A conductive epoxy 1132 can fill the concave center of standoff 430 (which provides a glue reservoir), securely connecting standoff 430 to grounding tab 412 and ferrite shield 420. In this manner, a ground connection for e-shield 410 can have high robustness against thermal cycling. The robust connection can allow wireless charger device 400 to maintain high performance over its lifetime, particularly at higher power output (where operating temperature may increase). In some embodiments, the inner surface of rear wall 503 of housing base 402 can have a surface feature, such as a recess or protrusion, that mechanically interlocks with a surface feature of standoff 430; such mechanical interlocking may provide additional robustness.

In the foregoing examples, housing base 402 is made of an electrically conductive material such as aluminum, which provides grounding for electrical safety and shielding to reduce EMI as well as effects of environmental metal on tuning of the inductive coil (e.g., in instances where the back of wireless charger device 400 is placed on a metal surface during operation). In other embodiments, the housing base can be made primarily of plastic or the like, which can reduce manufacturing costs. Examples will now be described.

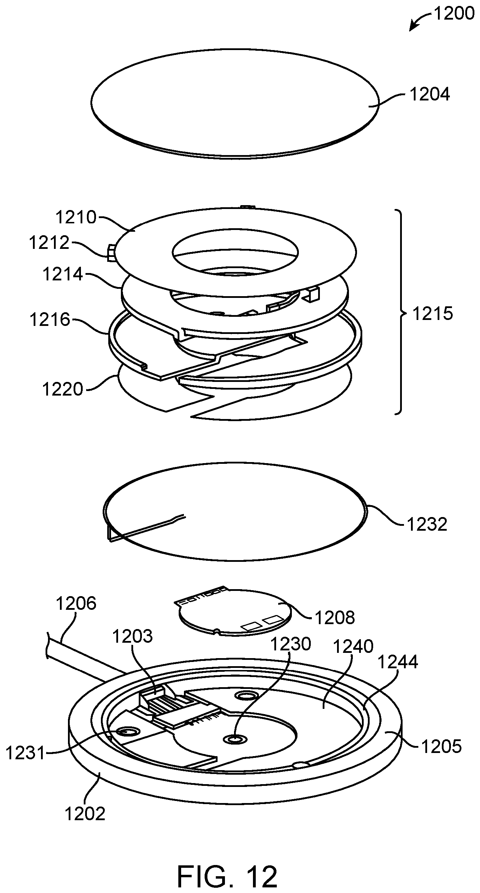

FIG. 12 shows an exploded view of a wireless charger device 1200 (implementing wireless charger device 100) according to some embodiments. Wireless charger device 1200 can have a similar form factor and similar performance to wireless charger device 400 described above; however, wireless charger device 1200 can incorporate a plastic body and other features that may reduce manufacturing costs.

Wireless charger device 1200 can have a puck-shaped main body defined by a housing that includes a cover (or cap) 1204 and a housing base 1202. Cover 1204 can be similar or identical to cover 404 described above. Housing base 1202 can be made of various plastic materials, e.g., via insert molding or injection molding, and can include a (cosmetic) plastic outer shell 1205 and a plastic inner frame 1240. Plastic inner frame 1240 can be molded around an aluminum insert 1230 (most of which is not visible in FIG. 12) that lines most or all of the sidewalls and inner bottom surface of outer shell 1205. Aluminum insert 1230 can be, for instance, made of die-cut or stamped aluminum. Openings 1231 in the plastic of inner frame 1240 can expose portions of aluminum insert 1230 to support grounding connections for an e-shield 1210. Similarly, a central opening 1233 through plastic inner frame 1240 can expose a central area of aluminum insert 1230 to provide grounding for a main logic board 1208. An annular magnetic alignment component (not shown in FIG. 12) can be incorporated into housing base 1202; examples are described below.

Charging coil assembly 1215 can be similar or identical to charging coil assembly 415 described above and can include an inductive coil 1214, a monolithic ferrite 1216 having a ferrite shield 1220 applied to a back (bottom) surface, and an e-shield 1210 with one or more grounding tabs 1212 that wrap around ferrite 1216 (and ferrite shield 1220) and electrically connect to aluminum insert 1230 through opening(s) 1231. An NFC coil 1232, which can be, e.g., a planar coil of three, four, or five turns, can be placed on top of plastic inner frame 1240, e.g., on an annular recessed surface 1244. (NFC coil 1232 can be similar or identical to NFC coil 432 described above.) Thermally-matched PSA (not shown in FIG. 12) can be used to secure NFC coil 1232 in position. Main logic board 1208 can be similar or identical to main logic board 408 described above and can include connection pads, control circuits, and so on. In some embodiments, some or all of the power circuitry can be external to the main body formed by housing base 1202 and cover 1204. For instance, as described below, power circuitry can be disposed in the cable boot.

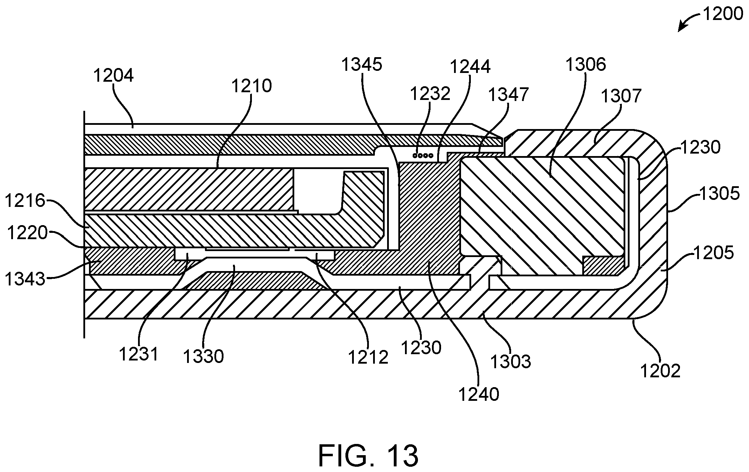

FIG. 13 is a partial cross-section view further illustrating features of wireless charger device 1200 according to some embodiments. Outer shell 1205 of housing base 1202 includes a rear wall 1303, a sidewall 1305, and an overhanging lip 1307. In some embodiments, lip 1307 can be sloped (e.g., at an angle of around 5 or 10 degrees) so that its inner edge is higher than its outer edge. Plastic inner frame 1240 can have a rear portion 1343 and a sidewall 1345. Sidewall 1345 can include a flange 1347 that extends outward to lip 1307. Recessed surface 1244 can accommodate NFC coil 1232.

Annular magnetic alignment component 1306 can be positioned under lip 1307 and flange 1347. In some embodiments, annular magnetic alignment component 1306 can be made using one or more bonded magnets that are magnetized (during or after manufacture) into a quad-pole magnetic orientation as described above. For example, annular magnetic alignment component 1306 can be formed as a unitary ring of bonded magnet material, with a gap in the ring to provide an entry point for wires from cable 1206 (shown in FIG. 12). While using a single ring-shaped bonded magnet may reduce costs, other types of magnets such as an annular arrangement of arcuate bonded magnets or sintered rare-earth magnets may also be used. For a given magnet size, bonded magnets generally produce weaker magnetic fields than sintered magnets; however, where lip 1307 and flange 1347 are made of plastic, a bonded magnet can produce a sufficiently strong field to facilitate alignment and attachment of wireless charger device 1200 to a complementary electronic device (e.g., electronic device 200 described above).

Fabrication of housing base 1202 can proceed using a process such as the following. First, aluminum insert 1230 can made, e.g., as a stamped aluminum piece in the desired shape. Next, annular magnetic alignment component 1304 can be formed or placed on the inboard side of the sidewalls of aluminum insert 1230. A first injection-molding process can be used to form plastic inner frame 1240, during which aluminum insert 1230 and annular magnetic alignment component 1304 become embedded in the plastic. A second injection-molding process can be used to form plastic outer shell 1205 around the outside of the structure. Other fabrication processes can also be used. Incorporating aluminum insert 1230 into housing base 1202 can provide areas for ground contacts and can also provide shielding against the effects of metal in the environment (e.g., where wireless charger device 1200 is placed on a metal surface) on coil tuning, while structural rigidity is provided by plastic inner frame 1240 and plastic outer shell 1205.

In some embodiments, plastic inner frame 1240 can be formed with one or more recesses or openings 1231 to expose portions of aluminum insert 1230, providing locations for grounding contact with e-shield 1210, ferrite shield 1226, and main logic board 1208. For instance, as shown in FIG. 13, grounding tab 1212 of e-shield 1210 can wrap around ferrite 1216 and extend into the area of opening 1231 under ferrite shield 1220. Conductive epoxy can be used to form the electrical connection, e.g., by filling opening 1231. In some embodiments, aluminum insert 1230 can include one or more raised areas 1330 to provide connection points for connecting grounding tabs 1212 to aluminum insert 1230. As shown, the plastic of inner frame 1240 can flow under raised area(s) 1330 during fabrication, which can enhance robustness of the ground connection.

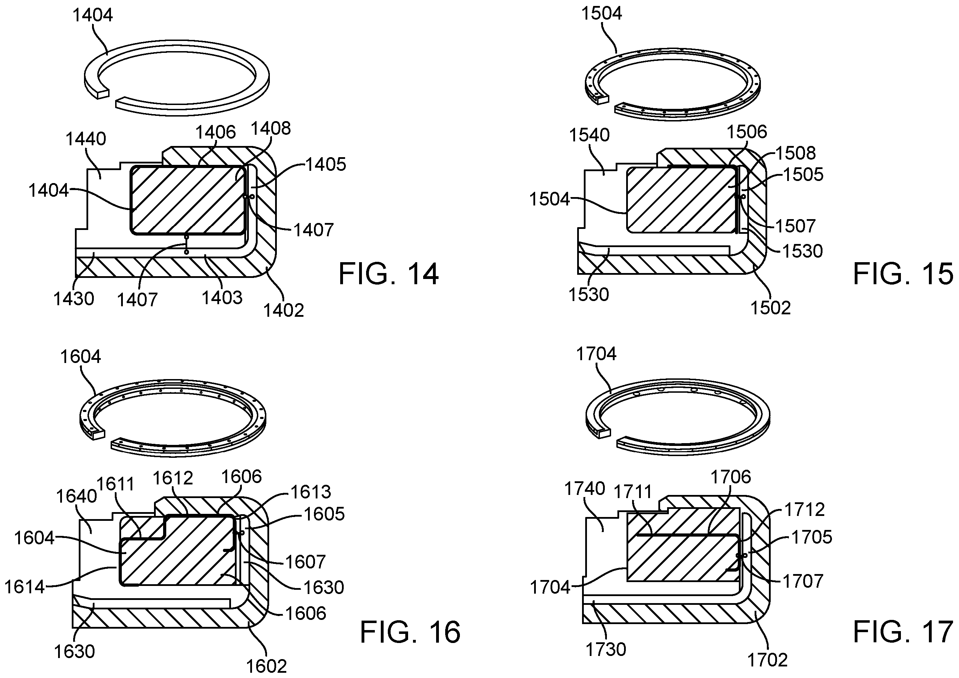

In various embodiments, it may be also desirable to ground annular magnetic alignment component 1306 (or annular magnetic alignment component 406) and/or to provide shielding that reduces the effect of the magnetic alignment component on coil tuning. Grounding of an annular magnetic alignment component can be achieved by adding a structure made of electrically conductive material (e.g., copper), at least part of which is exposed at a surface of the magnet. For instance, the conductive material can be exposed at the outer sidewall of the magnet and can contact the aluminum sidewall of the housing base (e.g., either sidewall 505 of housing base 402 or the sidewall of aluminum insert 1230), thereby providing electrical connection to ground. FIGs. 14-17 illustrate examples of incorporating copper structures into a magnet of an annular magnetic alignment component according to some embodiments.

FIG. 14 shows a simplified perspective view of an annular magnetic alignment component 1404 and a simplified partial cross-section view of annular magnetic alignment component 1404 inserted into a housing base 1402, which can be similar or identical to housing base 1202 and can be made of plastic with an aluminum insert 1430 having a sidewall 1405. As best seen in the cross-section view, annular magnetic alignment component 1404 includes a magnet 1408 plated with copper plating 1406 on the top, bottom, outer sidewall, and inner sidewall surfaces. In this example, magnet 1408 can be a sintered or bonded magnet. Electrical contact 1407 can be made with the sidewall 1405 and/or rear wall 1403 of aluminum insert 1430. For example, when plastic inner frame 1440 (which can be similar or identical to plastic inner frame 1240) is formed, pressure from the injected plastic may push copper plating 1406 into contact with sidewall 1405 and/or rear wall 1403 of aluminum insert 1430. The arrangement shown in FIG. 14 can also be used in embodiments where the entire housing base is made of aluminum (e.g., housing base 402 described above).

In some embodiments, the plating material can cover a reduced portion of the magnet(s). FIG. 15 shows a simplified perspective view of another annular magnetic alignment component 1504 and a simplified partial cross-section view of annular magnetic alignment component 1504 inserted into a housing base 1508, which can be similar or identical to housing base 1202 and can be made of plastic with an aluminum insert 1530 having a sidewall 1505. As best seen in the cross-section view, annular magnetic alignment component 1504 includes a magnet 1502 having a copper structure 1506 on the top and outer sidewall surfaces. In this example, magnet 1502 can be a sintered or bonded magnet. Copper structure 1506 can be formed by plating selected surfaces of magnet 1502, or copper structure 1506 can be a discrete part that is insert molded to form magnet 1502. Electrical contact 1507 can be made with the sidewall 1505 of aluminum insert 1530. For example, when plastic inner frame 1540 (which can be similar or identical to plastic inner frame 1240) is formed, pressure from the injected plastic may push copper structure 1506 into contact with sidewall 1505 of aluminum insert 1530. The arrangement shown in FIG. 15 can also be used in embodiments where the entire housing base is made of aluminum (e.g., housing base 402 described above). The configuration shown in FIG. 15 can reduce the amount of copper used as compared to the configuration shown in FIG. 14.

FIG. 16 shows a simplified perspective view of another annular magnetic alignment component 1604 and a simplified partial cross-section view of annular magnetic alignment component 1604 inserted into a housing base 1602, which can be similar or identical to housing base 1202 and can be made of plastic with an aluminum insert 1630 having a sidewall 1605. As best seen in the cross-section view, annular magnetic alignment component 1604 includes a bonded magnet 1608 integrally formed with a copper structure 1606 (e.g., using insert molding). Portions 1611 of copper structure 1606 are embedded in the material of bonded magnet 1608 while other portions 1612, 1613, 1614 are exposed on portions of the top, outer sidewall, and inner sidewall surfaces of bonded magnet 1608. Electrical contact 1607 can be made with the sidewall 1605 of aluminum insert 1630. For example, when plastic inner frame 1640 (which can be similar or identical to plastic inner frame 1240) is formed, pressure from the injected plastic may push copper structure 1606 into contact with sidewall 1605 of aluminum insert 1630.

FIG. 17 shows a simplified perspective view of another annular magnetic alignment component 1704 and a simplified partial cross-section view of annular magnetic alignment component 1704 inserted into housing base 1702, which can be similar or identical to housing base 1202 and can be made of plastic with an aluminum insert 1730 having a sidewall 1705. As best seen in the cross-section view, annular magnetic alignment component 1704 includes a bonded magnet 1708 integrally formed with a copper structure 1706 (e.g., using insert molding). Portions 1711 of copper structure 1706 are embedded in the material of bonded magnet 1708 while another portion 1712 is exposed on a portion of the outer sidewall surface of bonded magnet 1708. Electrical contact 1707 can be made with the sidewall 1705 of aluminum insert 1730. For example, when inner plastic frame 1740 (which can be similar or identical to plastic inner frame 1240) is formed, pressure from the injected plastic may push copper structure 1706 into contact with sidewall 1705 of aluminum insert 1730.

It should be understood that the examples of FIGs. 14-17 are illustrative. Any type of conductive material can be incorporated into or plated on the alignment magnet(s). Provided that a portion of the conductive material is exposed at a surface of the magnet(s) that contacts the aluminum insert, the magnet(s) can be grounded.

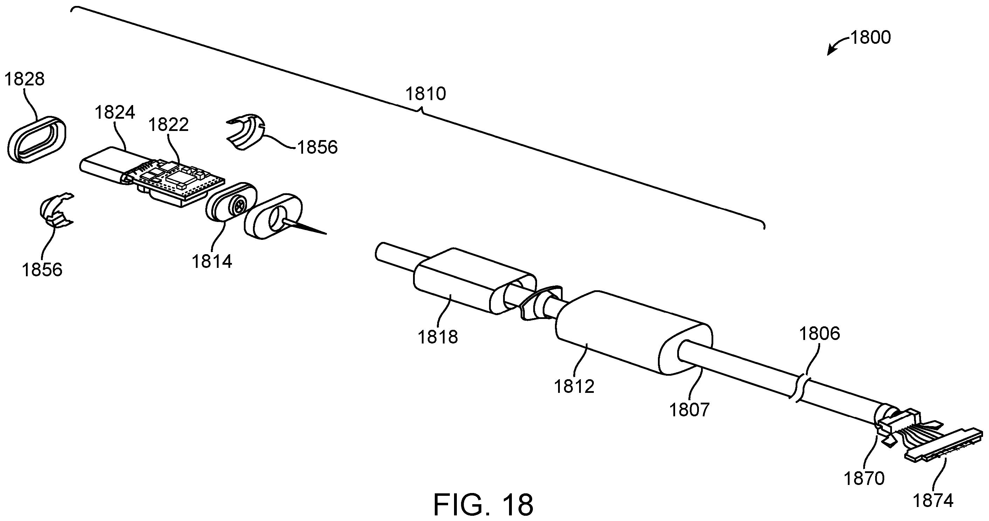

As mentioned above, in some embodiments, some or all of the power and control circuitry for a wireless charger device (including, e.g., wireless charger device 400 or wireless charger device 1200) can be disposed outside the main body of the device. For example, referring again to FIG. 1A, power and control circuitry can be placed in connector boot 108. Placing the power circuitry at a location external to main body 110 can improve thermal performance of a wireless charger device. FIG. 18 shows an exploded view of a cable assembly 1800 with incorporated power circuitry that can be connected to a wireless charger device (e.g., wireless charger device 100, wireless charger device 400, or wireless charger device 1200) according to some embodiments. Cable assembly 1800 can include a cable 1806, which can be of any length desired and can include multiple wires (or other electrical conductors) that are electrically insulated from each other to carry power, ground, and data signals. Cable 1802 has a proximal end 1870 that can be inserted into the main body of the wireless charger device (e.g., via opening 403 shown in FIG. 4). Proximal wire ends 1874 can be connected (e.g., using solder) to contact pads on the main logic board (e.g., contact pads 425 on main logic board 408).

Cable 1806 has a distal end 1807 that can be captively coupled to a boot assembly 1810. Boot assembly 1810 can include a boot housing 1812 made of a plastic such as polycarbonate, polybutylene terephthalate (PBT), or the like. A crimp 1814 (e.g., made of stainless steel) can secure distal end 1807 of cable 1806 to the interior of boot housing 1812.

A circuit board 1822 can be disposed inside boot housing 1812. Circuit board 1822 can include power circuity such as a DC boost circuit and optionally an inverter. Circuit board 1822 can also include logic circuitry to control operation of the power circuitry. Similarly to main logic board 408 described above, the power and/or logic circuitry can be implemented using integrated circuits mounted on the surface(s) of circuit board 1822. Circuit board 1822 can have a connector 1824 mounted on the distal end. Connector 1824 can be, e.g., a USB-C plug connector or other standard connector. Connector 1824 can be removably connected to an external power source (not shown) such as a USB-C adapter module that can be plugged into a standard power outlet.

An electromagnetic interference (EMI) shell 1818 can line the interior of boot housing 1812 around circuit board 1822. EMI shell 1818 can be made of a copper alloy (e.g., brass) or other conductive material and can reduce electromagnetic interference that may be caused by operation of circuitry on circuit board 1822. In some embodiments, crimp 1814 can be laser-welded to EMI shell 1818. Clamshell spacers 1856 can be used to complete an EMI enclosure around circuit board 1822. For instance, clamshell spacers 1856 can be made of a conductive metal (e.g., stainless steel) and electrically connected to EMI shell 1818 and connector 1824. Clamshell spacers 1856 can also prevent unwanted electrical contact between components on circuit board 1822 and EMI shell 1818. Faceplate 1828 can be disposed over the distal end of circuit board 1822 and secured to boot housing 1812 such that connector 1824 protrudes through the opening in faceplate 1828. In some embodiments, an EMI absorber material can be placed over selected components on circuit board 1822 (e.g., components that generate EMI noise). Additionally or instead, EMI absorber material can be selectively placed inside portions of EMI shell 1818 that align with noisy components when circuit board 1822 is inserted into EMI shell 1818. While it is possible to line the entire interior of EMI shell 1818 with EMI absorber material, selective positioning of the EMI absorber material can reduce costs while maintaining acceptably low levels of EMI (e.g., below regulatory limits) at maximum operating power. After circuit board 1822 is inserted into EMI shell 1818, the interior of boot housing 1812 can be filled with a thermally conductive potting material prior to attaching faceplate 1828. The thermally conductive potting material can improve heat transfer away from circuit board 1822. The potting material can flow around any EMI absorber material that may be present.

In some embodiments, all power circuitry can be disposed on circuit board 1822, and cable 1806 can carry alternating current to the wireless charger device (e.g., wireless charger device 100 or other wireless charger device described herein). In such embodiments, the main logic board of the wireless charger device (e.g., main logic board 208 of wireless charger device 100) can couple the AC wires of cable 1806 to the inductive coil (e.g., inductive coil 202). In other embodiments, circuit board 1822 may include a portion of the power circuitry, e.g., a DC boost circuit, while other portions of the power circuitry (e.g., an inverter) are disposed on the main logic board. It will be appreciated that power circuitry can generate significant amounts of heat and that placing some or all of the power circuitry in boot assembly 1810 rather than within main body 110 of wireless charger device 100 can reduce the amount of heat generated within main body 110. In some embodiments, logic circuitry on main logic board 208 can monitor the temperature locally, in boot assembly 1810 (e.g., based on signals from circuit board 1822), and in the portable electronic device being charged (e.g., using Qi communication protocols) and can reduce the charging current if temperature at any monitored location exceeds a preset upper limit. Providing high thermal conductivity in boot assembly 1810 can avoid having boot assembly 1810 become a limiting factor for charging performance.

Regardless of where the power circuitry is located, main logic board 208 within main body 110 can include logic circuits to monitor the behavior of inductive coil 202 and to control any power circuitry that may be located on main logic board 208 and/or to send control signals to circuit board 1822 via data wires included in cable 1806 (e.g., implementing I²C or other point-to-point communication protocols). Circuit board 1822 can include logic circuits to respond to control signals received from main logic board 208, e.g., by controlling power circuitry located on circuit board 1822.

It will be appreciated that the foregoing examples are illustrative and not limiting. Components or features described with reference to different embodiment may be combined to the extent logic permits. For instance, common-mode choke implementations as described with reference to Fig 7 can also be used in wireless charger device 1200 or other devices. Magnetic alignment components can be fabricated in any manner desired and can incorporate sintered and/or bonded magnets. Where a plastic outer housing is desired, a variety of techniques may be used to provide a conductive inner shell for grounding and shielding. NFC coils can be included or omitted as desired.

In some embodiments, a wireless charger device such as wireless charger device 400 or wireless charger device 1200 can deliver higher power, e.g., up to 25 W, while keeping EMI below acceptable limits (e.g., limits established by law or regulation in various jurisdictions), as compared to conventional wireless charger devices that are limited to operating at lower power (e.g., up to 15 W). A wireless charger device such as wireless charger device 400 or wireless charger device 1200 can also deliver higher power in a form factor that is the same or similar to conventional wireless charger devices. Such advantages can be made possible through various combinations of features, including monolithic ferrite structures that include sidewalls to confine flux, the integrated common-mode choke, robust grounding of the ferrite and e-shield, and/or other features described herein. In some embodiments, wireless charger device 1200 can provide similar performance to wireless charger device 400 with reduced manufacturing costs.

### Additional Embodiments

While the invention has been described with reference to specific embodiments, those skilled in the art will appreciate that variations and modifications are possible. For example, the particular configuration of the charging coil assembly, the annular magnetic alignment component, and/or the NFC coil assembly can be modified. In some embodiments, an NFC coil can be omitted entirely. Features described with reference to different implementations or embodiments can be combined in the same implementation, and not all features described with respect to a particular implementation need be present in a given embodiment. In some embodiments, all power and logic circuitry can be located on the main logic board, and the cable boot can be a standard cable boot assembly with a plug connector, such as a USB-C boot assembly. Further, the puck shape is not required, and a wireless charger device can have a larger form factor and/or a different shape. A wireless charger device can be designed to meet various standards for avoiding demagnetization of magnetic-stripe cards placed on it; for example, the wireless charger device may be HiCo safe (i.e., does not demagnetize cards that were magnetized to the HiCo standard) but not LoCo safe (i.e., may demagnetize cards that were magnetized to the LoCo standard). All materials mentioned herein are illustrative of suitable materials for various components, and those skilled in the art will be able to identify other materials that may be substituted, e.g., based on electrical, magnetic, and/or thermal properties of the materials in question.

Throughout this description, the terms "front," "top," or "proximal" are used interchangeably to refer to surfaces or features that are oriented toward the wireless power transfer interface, and the terms "back," "rear," "bottom," or "distal" are used interchangeably to refer to surfaces or features that are oriented opposite to the "front," "top," or "proximal" direction. It should be understood that no particular spatial orientation is implied.

Various features described herein related to detection of devices and exchange of information (e.g., using NFC) can be realized using any combination of dedicated components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa. Computer programs incorporating various features described herein may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium). Further, in regard to any collection or exchange of information or data by or between devices, it is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Accordingly, although the invention has been described with respect to specific embodiments, it will be appreciated that the invention is intended to cover all modifications and equivalents within the scope of the following claims.

### NUMBERED STATEMENTS OF INVENTION

1. A wireless charger device comprising:
   a housing including a cap and a housing base forming an enclosure, the housing base made at least in part of an electrically conductive material and having a back wall;
   an annular magnetic alignment structure disposed adjacent to a sidewall of the housing;
   an inductive coil disposed inboard of the annular magnetic alignment structure;
   a circuit board disposed under the inductive coil, the circuit board including one or more integrated circuits configured to control a current through the inductive coil;
   a monolithic ferrite disposed behind a back surface of the inductive coil, the monolithic ferrite including sidewall portions that extend into an area between the inductive coil and the annular magnetic alignment structure and a raised central portion that extends over the circuit board;
   a conductive material disposed on at least a portion of a back surface of the monolithic ferrite;
   an electric shield disposed over a front surface of the inductive coil, the electric shield having a plurality of grounding tabs that extend from a peripheral edge of the electric shield and wrap around to the back surface of the monolithic ferrite; and
   a plurality of standoffs made of an electrically conductive material and disposed between the back surface of the monolithic ferrite and the back wall of the housing base,
   wherein each of the grounding tabs of the electric shield is connected between the conductive material on the back surface of the monolithic ferrite and one of the standoffs, thereby grounding the electric shield to the housing base.
2. The wireless charger device of statement 21 wherein the annular magnetic alignment structure comprises one or more bonded magnets.
3. The wireless charger device of statement 21 wherein the housing base is made of aluminum.
4. The wireless charger device of statement 21 wherein the housing base is made of plastic and includes an inner frame made of an electrically conductive material.
5. The wireless charger device of statement 4 wherein the electrically conductive material includes aluminum.
6. The wireless charger device of statement 21 wherein at least a portion of an outer surface of the annular magnetic alignment structure is plated with an electrically conductive plating material and electrically connected to the electrically conductive material of the housing base.
7. The wireless charger device of statement 23 wherein the plating material comprises copper.
8. A wireless charger device comprising:
   a housing including a cap and a housing base forming an enclosure;
   an annular magnetic alignment structure disposed adjacent to a sidewall of the housing;
   an inductive coil disposed inboard of the annular magnetic alignment structure, the inductive coil having first and second ends;
   a circuit board disposed under the inductive coil, the circuit board including one or more integrated circuits configured to control a current through the inductive coil;
   a ferrite disposed behind a back surface of the inductive coil, the ferrite having a planar portion that extends behind the back surface of the inductive coil, the planar portion having a slot therethrough;
   a first choke coil wrapped around a portion of the ferrite between an edge of the ferrite and the slot, wherein windings of the first choke coil extend through the slot; and
   a second choke coil wrapped around the portion of the ferrite between the edge of the ferrite and the slot, wherein windings of the second choke coil extend through the slot,
   wherein the first choke coil and the second choke coil are electrically coupled to the first and second ends of the inductive coil.
9. The wireless charger device of statement 25 wherein windings of the first choke coil are interleaved with windings of the second choke coil.
10. The wireless charger device of statement 25 wherein the ferrite has a sidewall that extends into an area between the inductive coil and the annular magnetic alignment structure and a raised central portion that extends over the circuit board, wherein the slot is formed to one side of the raised central portion, and wherein the sidewall includes a gap on the same side of the raised central portion as the slot to accommodate the first and second choke coils.
11. The wireless charger device of statement 25 further comprising:
   an electric shield disposed over a front surface of the inductive coil, the electric shield having a plurality of grounding tabs that extend from a peripheral edge of the electric shield and wrap around to the back surface of the ferrite.
12. The wireless charger device of statement 28 further comprising:
   a plurality of standoffs made of an electrically conductive material and disposed between the back surface of the ferrite and a back wall of the housing base; and
   a conductive material disposed on at least a portion of a back surface of the ferrite,
   wherein each of the grounding tabs of the electric shield is connected between the conductive material on the back surface of the ferrite and one of the standoffs, thereby grounding the electric shield to the housing base.
13. A wireless charger device comprising:
   a housing including a cover and a housing base forming an enclosure, the housing base including:
      an outer shell made of plastic;
      an inner frame made of plastic; and
      an electrically conductive insert between the outer shell and the inner frame, the electrically conductive insert including a rear wall and a sidewall, wherein portions of the electrically conductive insert are exposed through a plurality of openings in the inner frame;
   an annular magnetic alignment structure disposed adjacent to the sidewall of the electrically conductive insert;
   an inductive coil disposed inboard of the annular magnetic alignment structure and a sidewall of the inner frame;
   a circuit board disposed under the inductive coil, the circuit board including one or more integrated circuits configured to control a current through the inductive coil;
   a ferrite disposed behind a back surface of the inductive coil, the ferrite including sidewall portions that extend into an area between the inductive coil and the sidewall of the inner frame and a raised central portion that extends over the circuit board; and
   a conductive material disposed on at least a portion of a back surface of the ferrite,
   wherein the conductive material on the back surface of the ferrite is electrically connected to the electrically conductive insert via one of the openings in the inner frame.
14. The wireless charger device of statement 30 further comprising:
   an electric shield disposed over a front surface of the inductive coil, the electric shield having a plurality of grounding tabs that extend from a peripheral edge of the electric shield and wrap around to the back surface of the ferrite,
   wherein each of the grounding tabs of the electric shield is connected between the conductive material on the back surface of the ferrite and the electrically conductive insert via one of the openings in the inner frame.
15. The wireless charger device of statement 30 wherein the ferrite has a planar portion that extends behind the back surface of the inductive coil, the planar portion having a slot therethrough and wherein the wireless charger device further comprises:
   a first choke coil wrapped around a portion of the ferrite between an edge of the ferrite and the slot, wherein windings of the first choke coil extend through the slot; and
   a second choke coil wrapped around the portion of the ferrite between the edge of the ferrite and the slot, wherein windings of the second choke coil extend through the slot,
   wherein the first choke coil and the second choke coil are connected to respective ends of the inductive coil.
16. The wireless charger device of statement 30 wherein the electrically conductive insert comprises aluminum.
17. The wireless charger device of statement 30 wherein the ferrite is a monolithic ferrite.
18. The wireless charger device of statement 30 wherein the annular magnetic alignment structure comprises one or more bonded magnets.
19. The wireless charger device of statement 18 wherein at least a portion of an outer surface of the one or more bonded magnets is plated with an electrically conductive plating material that is electrically connected to the electrically conductive insert.
20. The wireless charger device of statement 34 wherein the plating material comprises copper.

## Claims

1. A wireless charger device comprising:
a housing including a cap and a housing base forming an enclosure, the housing base made at least in part of an electrically conductive material and having a back wall;
an annular magnetic alignment structure disposed adjacent to a sidewall of the housing;
an inductive coil disposed inboard of the annular magnetic alignment structure;
a circuit board disposed under the inductive coil, the circuit board including one or more integrated circuits configured to control a current through the inductive coil;
a monolithic ferrite disposed behind a back surface of the inductive coil, the monolithic ferrite including sidewall portions that extend into an area between the inductive coil and the annular magnetic alignment structure and a raised central portion that extends over the circuit board;
a conductive material disposed on at least a portion of a back surface of the monolithic ferrite;
an electric shield disposed over a front surface of the inductive coil, the electric shield having a plurality of grounding tabs that extend from a peripheral edge of the electric shield and wrap around to the back surface of the monolithic ferrite; and
a plurality of standoffs made of an electrically conductive material and disposed between the back surface of the monolithic ferrite and the back wall of the housing base,
wherein each of the grounding tabs of the electric shield is connected between the conductive material on the back surface of the monolithic ferrite and one of the standoffs, thereby grounding the electric shield to the housing base.

2. The wireless charger device of claim 1 wherein the housing base is made of aluminum.

3. The wireless charger device of claim 1 or 2 wherein at least a portion of an outer surface of the annular magnetic alignment structure is plated with an electrically conductive plating material and electrically connected to the electrically conductive material of the housing base.

4. The wireless charger device of claim 3 wherein the plating material comprises copper.

5. The wireless charger device of any preceding claim wherein the monolithic ferrite has a planar portion that extends behind the back surface of the inductive coil, the planar portion having a slot therethrough, the device further comprising:
a first choke coil wrapped around a portion of the ferrite between an edge of the ferrite and the slot, wherein windings of the first choke coil extend through the slot; and
a second choke coil wrapped around the portion of the ferrite between the edge of the ferrite and the slot, wherein windings of the second choke coil extend through the slot,
wherein the first choke coil and the second choke coil are electrically coupled to the first and second ends of the inductive coil.

6. The wireless charger device of claim 5 wherein windings of the first choke coil are interleaved with windings of the second choke coil.

7. The wireless charger device of claim 5 or 6 wherein the ferrite has a sidewall that extends into an area between the inductive coil and the annular magnetic alignment structure and a raised central portion that extends over the circuit board, wherein the slot is formed to one side of the raised central portion, and wherein the sidewall includes a gap on the same side of the raised central portion as the slot to accommodate the first and second choke coils.

8. The wireless charger device of claim 5, 6 or 7 further comprising:
an electric shield disposed over a front surface of the inductive coil, the electric shield having a plurality of grounding tabs that extend from a peripheral edge of the electric shield and wrap around to the back surface of the ferrite.

9. The wireless charger device of claim 8 further comprising:
a plurality of standoffs made of an electrically conductive material and disposed between the back surface of the ferrite and a back wall of the housing base; and
a conductive material disposed on at least a portion of a back surface of the ferrite,
wherein each of the grounding tabs of the electric shield is connected between the conductive material on the back surface of the ferrite and one of the standoffs, thereby grounding the electric shield to the housing base.

10. The wireless charger device of any preceding claim wherein the housing base includes:
an outer shell made of plastic;
an inner frame made of plastic; and
an electrically conductive insert between the outer shell and the inner frame, the electrically conductive insert including a rear wall and a sidewall, wherein portions of the electrically conductive insert are exposed through a plurality of openings in the inner frame and wherein the conductive material on the back surface of the ferrite is electrically connected to the electrically conductive insert via one of the openings in the inner frame.

11. The wireless charger device of claim 10 wherein the ferrite has a planar portion that extends behind the back surface of the inductive coil, the planar portion having a slot therethrough and wherein the wireless charger device further comprises:
a first choke coil wrapped around a portion of the ferrite between an edge of the ferrite and the slot, wherein windings of the first choke coil extend through the slot; and
a second choke coil wrapped around the portion of the ferrite between the edge of the ferrite and the slot, wherein windings of the second choke coil extend through the slot,
wherein the first choke coil and the second choke coil are connected to respective ends of the inductive coil.

12. The wireless charger device of claim 10 or 11 wherein the electrically conductive insert comprises aluminum.

13. The wireless charger device of claim 10, 11 or 12 wherein the annular magnetic alignment structure is made of one or more bonded magnets.

14. The wireless charger device of claim 13 wherein at least a portion of an outer surface of the one or more bonded magnets is plated with an electrically conductive plating material that is electrically connected to the electrically conductive insert.

15. The wireless charger device of claim 14 wherein the plating material comprises copper.
